## Europäisches Patentamt
## European Patent Office
## Office européen des brevets

(19)

(11) Veröffentlichungsnummer: **0 233 357 B1**

(12) **EUROPÄISCHE PATENTSCHRIFT**

(45) Veröffentlichungstag der Patentschrift: 06.03.91

(21) Anmeldenummer: 86117610.5

(22) Anmeldetag: 17.12.86

(51) Int. Cl.⁵: **G01B 5/30, B60C 23/06, G01M 17/02**

(54) Verfahren zur Messung der globalen Verformung eines Reifens.

(30) Priorität: **19.12.85 DE 3544893**

(43) Veröffentlichungstag der Anmeldung:
**26.08.87 Patentblatt 87/35**

(45) Bekanntmachung des Hinweises auf die
Patenterteilung:
**06.03.91 Patentblatt 91/10**

(84) Benannte Vertragsstaaten:
**AT BE DE FR GB IT LU NL SE**

(56) Entgegenhaltungen:
**DE-A- 3 137 248**
**DE-A- 3 301 173**
**GB-A- 1 479 442**
**GB-A- 2 056 144**
**US-A- 2 378 237**

**S.K.CLARK: "MECHANICS OF PNEUMATIC TI-
RES", August 1981, Seiten 541,577-584,
H.VAN ELDIK THIEME et al.: "Measurement of
tire properties", U.S. Department of Transportation, Washington, D.C., US;**

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

(72) Erfinder: **Neugebauer, Jürgen, Dipl.-Ing.
Weyprechtstrasse 10
W-6100 Darmstadt(DE)**
Erfinder: **Diefenbach, Walter
Eichendorffstrasse 36
W-6103 Griesheim(DE)**
Erfinder: **Grubisic, Vatroslav, Dr.-Ing.
Zum Stetteritz 1
W-6107 Reinheim 4(DE)**

(74) Vertreter: **Kraus, Walter, Dr. et al
Patentanwälte Kraus, Weisert & Partner
Thomas-Wimmer-Ring 15
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Messung der globalen Verformung eines Reifens auch während des Fahrbetriebs, in dem man die in einer Querschnittsebene des Reifens auftretende Abstandsänderung zwischen einem für das Verformungsverhalten repräsentativen Meßpunkt des Reifens relativ zu einem an der Felge befindlichen Fixpunkt erfaßt, wobei sich der Meßpunkt und der Fixpunkt innerhalb des Reifens befinden und wobei die Abstandsänderungen mittels eines Meßwertaufnehmers erfaßt werden.

Die Steifigkeitseigenschaften eines Reifens, d.h. seine vertikale und laterale Federrate, spielen für den Fahrkomfort, die Handling-Eigenschaften und die Lebensdauer des Reifens eine wichtige Rolle. Für die Gestaltung eines Reifens ist es deshalb erforderlich, seine vertikale und laterale Verformung auch im Fahrbetrieb bis hin zu hohen Geschwindigkeiten zu erfassen.

Aus dem Buch "Mechanics of Pneumatic Tires" von H.C.A. van Eldik Thieme, U.S. Department of Transportation DOT HS 805952, August 1981, Seite 577 ist ein Verfahren der eingangs genannten Art bekannt, bei dem man ein unter Federzug stehendes flexibles Seil mit einem Ende in der Mitte der Innenseite der Reifenlauffläche und mit seinem anderen Ende an einem an der Felge angeordneten Potentiometer befestigt. Eine vertikale Verformung des Reifens bewirkt über das Seil eine Potentiometer-Verstellung, d.h. eine Veränderung des abgreifbaren Widerstandswertes, die als Meßwert für die Reifendeformation dienen soll. Diese Anordnung hat den Nachteil, daß mit ihr nur die vertikalen, nicht aber auch die lateralen Verformungen gemessen werden können. Die Meßergebnisse werden jedoch durch die überlagerten lateralen Verformungen beeinflußt.

Weiter ist in der DE-OS 33 01 173 eine Vorrichtung zur Ermittlung der Gürtellagen bei Fahrzeugluftreifen beschrieben, die einen durch den Gürtel verstimmbaren elektrischen Schwingkreis und eine von diesem Schwingkreis abhängige Anzeigeeinrichtung aufweist, wobei der Schwingkreis in Abhängigkeit vom Winkelanstieg der Gürtelfestigkeitsträger beeinflußbar ist. Mit dieser Vorrichtung wird nur die richtige Lage der Stahldrähte der Gürtellagen bei der Reifenherstellung geprüft. Hierbei handelt es sich um eine Qualitätskontrolle, die deswegen notwendig ist, weil nachgeprüft werden muß, ob der hinsichtlich des Einfügens der Gürtellagen weitgehend in Handarbeit hergestellte Fahrzeugreifen richtig zusammengebaut worden ist, da es sehr unvorteilhaft ist, wenn bei der Fertigung Gürtellagen seitlich verrutschen.

Aus der DE-OS 31 37 248 ist ein Verfahren zur Vorhersage einer Reifenvariablen bekannt, bei dem eine Rotation eines Reifens relativ zu einer ersten Meßeinrichtung durchgeführt und das seitliche Auswandern auf einer Seite des Reifens mit der ersten Meßeinrichtung in einer Stellung zwischen dem Bereich seiner maximalen Querschnittsbreite und seiner äußeren Radialfläche gemessen wird. Ferner wird eine Rotation des Reifens relativ zu einer zweiten Meßeinrichtung durchgeführt, und das seitliche Auswandern auf der anderen Seite des Reifens wird mit der zweiten Meßeinrichtung in einer zweiten Stellung, die allgemein den gleichen Radius wie die erstgenannte Stellung hat, gemessen. Um die Größe der Reifenvariablen zu erhalten, werden die ersten harmonischen Werte für die Auswanderungen in jeder Stellung bestimmt und für entsprechende Umfangsstellen um den Reifen herum addiert. In diesem bekannten Verfahren wird nur das seitliche Auswandern des Reifens von außen abgetastet, so daß nur Stellen an der Reifenseitenwand, nicht jedoch an der Reifenlauffläche erfaßt werden können. Außerdem sind die beiden Meßeinrichtungen ortsfest, während sich der Reifen relativ zu denselben dreht, so daß infolgedessen kein relativ zur Felge ortsfestes Meßsystem vorhanden ist.

Aufgabe der Erfindung ist es demgegenüber, ein Verfahren der eingangs genannten Art so auszubilden, daß damit sowohl die vertikale als auch die laterale Verformung des Reifens ermittelt werden können, und zwar auch während des Fahrbetriebs und den dabei auftretenden hohen Geschwindigkeiten.

Diese Aufgabe wird erfindungsgemäß dadurch gelöst, daß man die in der Querschnittsebene des Reifens auftretenden vertikalen und lateralen Verschiebungen des Meßpunkts relativ zu zwei an der Felge oder in ihrer Nähe befindlichen Fixpunkten erfaßt, die sich beide innerhalb des Reifens befinden und mit dem Meßpunkt ein innerhalb der Querschnittsebene des Reifens liegendes Dreieck bilden, wobei man im Meßpunkt und in den Fixpunkten je ein Befestigungselement anbringt und am Befestigungselement des Meßpunkts zwei Meßwertaufnehmer beweglich anordnet, von denen man den einen mit dem Befestigungselement des einen Fixpunkts und den anderen mit dem Befestigungselement des anderen Fixpunkts beweglich verbindet.

Der mit dem Verfahren nach der Erfindung erzielte Vorteil besteht insbesondere darin, daß nicht nur die vertikalen, sondern auch die lateralen Verformungen des Reifens sowohl bei statischer Belastung als auch im Fahrbetrieb erfaßt werden können. Damit steht dem Versuchsingenieur ein wichtiges Hilfsmittel zur Optimierung von Form und Aufbau eines Reifens zur Verfügung.

Eine Weiterbildung des erfindungsgemäßen Verfahrens zeichnet sich dadurch aus, daß als Meßwertaufnehmer jeweils in Reihe mit einem elastischen Glied angeordnete Kraftmeßelemente verwendet werden, wobei die Meßsignale der Kraftmeßelemente als dem Weg des Meßpunkts, an dem die Meßwertaufnehmer angreifen, proportionales Wegsignal verwendet wird.

Zwar sind aus der DE-OS 33 09 524, der DE-PS 958 511 und der DE-AS 10 68 911 Meßwertaufnehmer bekannt, die aus einer Reihenanordnung eines Kraftmeßelements mit einem elastischen Glied gebildet sind. Jedoch werden alle diese Meßwertaufnehmer als Kraftmeßeinrichtungen zum Messen einer Druck- und/ oder Zugkraft verwendet. Gemäß der Erfindung hingegen wird das Meßsignal als Wegsignal verwendet, mit dem der vom Meßpunkt durchlaufene Weg gemessen wird, so daß es bei dieser Verwendung des Meßwertaufnehmers in dem erfindungsgemäßen Verfahren möglich ist, die vertikalen und lateralen Verschiebungen des Meßpunkts in besonders einfacher und damit besonders zuverlässiger Weise zu messen.

Gemäß einer Ausgestaltung der Erfindung wählt man als Ort für den Meßpunkt eine Stelle in der Mitte der Innenseite der Lauffläche des Reifens und als Ort für die Fixpunkte jeweils eine Stelle auf der Innenseite eines jeden Wulstes.

Andere Weiterbildungen der Erfindung sind in den Unteransprüchen angegeben.

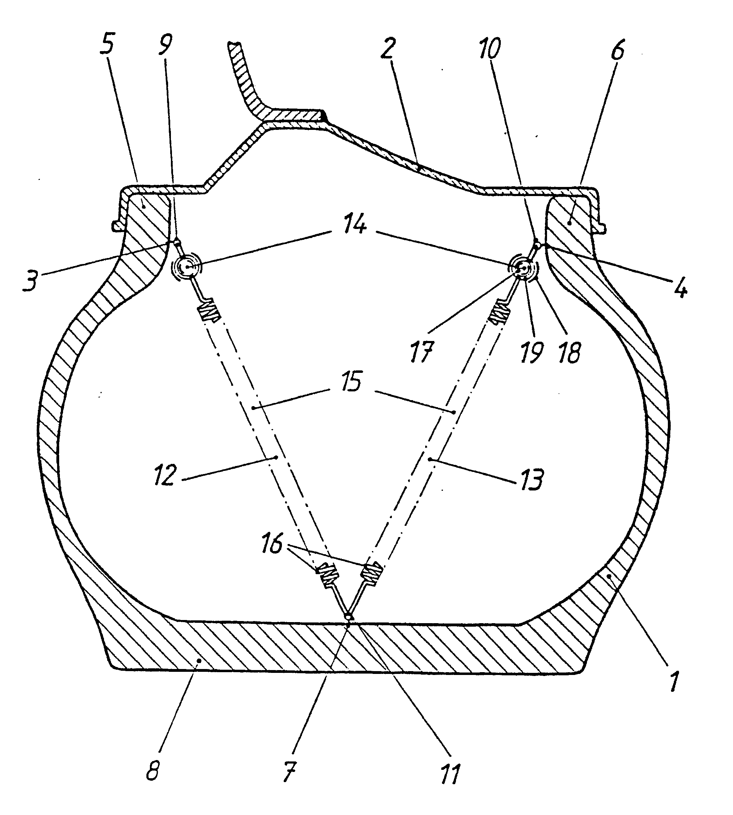

Ein Ausführungsbeispiel für eine Anordnung zur Durchführung des erfindungsgemäßen Verfahrens ist in der Zeichnung dargestellt und wird im folgenden näher beschrieben.

Die Zeichnung zeigt einen Reifen 1, der auf eine Felge 2 aufgezogen ist, im Querschnitt. Im Innern des Reifens 1 sind als Fixpunkte 3 und 4 zwei einander gegenüberliegende Stellen der Wülste 5 und 6 sowie als Meßpunkt 7 eine Stelle in der Mitte der Innenseite der Lauffläche 8 gewählt. In den Fixpunkten 3 und 4 sind je ein Befestigungselement 9 bzw.10 und im Meßpunkt 7 ein Befestigungselement 11 angebracht. Zwischen dem Meßpunkt 7 und den Fixpunkten 3 und 4 sind an den zugehörigen Befestigungselementen 11 und 9 bzw. 10 je ein Meßwertaufnehmer 12 bzw. 13 angeordnet. Jeder der beiden Meßwertaufnehmer 12 bzw. 13 besteht aus einem Kraftmeßelement 14 und einem linear elastischen Glied 15, beispielsweise einer Zugfeder 16. Als Kraftmeßelement 14 dient ein mit Dehnungsmeßstreifen 17 und 18 versehener Hohlzylinder 19 geringer Höhe aus einem hochfesten Blech. Die Befestigung der Meßwertaufnehmer 12 und 13 an den Befestigungselementen 11 und 9 bzw. 10 erfolgt beweglich, wobei die Zugfedern 16 eine der Verformung des Reifens angepaßte Vorspannung erhalten.

Die Fixpunkte 3 und 4 beschreiben mit dem Meßpunkt 7 ein Dreieck, dessen Geometrieänderungen meßbar sind. Durch die vertikale und laterale Reifenverformung bewegt sich der Meßpunkt 7, was zu einer Verkürzung bzw. Verlängerung der von den Meßwertaufnehmern 12 und 13 gebildeten Schenkel des Dreiecks führt. Da die elastischen Glieder 15 eine lineare Kraft-Weg-Charakteristik aufweisen, geben die Kraftmeßelemente 14 ein dem Weg des Meßpunktes 7 direkt proportionales Meßsignal ab, das beispielsweise an Schleifringe geführt und dort abgegriffen werden kann. In Kenntnis der Ausgangsgeometrie der gesamten Anordnung sowie der Empfindlichkeit der Kraftmeßelemente 14 kann zu jedem Zeitpunkt einer dynamischen Verformung des Reifens 1, d.h. im Fahrbetrieb, die Lage des Meßpunktes 7 aus den Änderungen der Abstände der Fixpunkte 3 und 4 vom Meßpunkt 7 in einfacher Weise berechnet werden, wobei die laufende Meßwertverarbeitung vorzugsweise mit Hilfe eines Rechners erfolgt.

Für die Anwendung des erfindungsgemäßen Verfahrens ist es nicht erforderlich, daß als Meßpunkt eine Stelle in der Mitte der Innenseite der Lauffläche 8 gewählt wird. Vielmehr kann als Meßpunkt jede Stelle im Bereich der Innenkontur des Reifens genommen werden, sofern nicht (bei extremer Seitenverformung) die Beweglichkeit des Meßwertaufnehmers beeinträchtigt wird. Dadurch, daß man in der Wahl der Lage des Meßpunktes frei ist, können einzelne Stellen des Reifens jeweils gesondert hinsichtlich ihrer Verformungen untersucht werden.

Bei höheren Fahrgeschwindigkeiten können unter dem Einfluß der auf die Meßwertaufnehmer einwirkenden Fliehkraft die Meßwerte verfälscht werden. Gemäß einer weiteren Ausgestaltung der Erfindung wird zur Vermeidung dieses Störeffekts der Einfluß der Fliehkraft auf die Meßwerte in an sich bekannter Weise kompensiert. Dabei kann die Kompensation sowohl mechanisch, beispielsweise durch Verwendung extrem leichter Meßwertaufnehmer, oder elektrisch, beispielsweise durch Erzeugen eines der Fliehkraft proportionalen Meßwertes und dessen Einspeisen in eine Brückenschaltung, erfolgen.

Für den Fall, daß zusätzlich zur vertikalen und lateralen Reifenverformung auch eine beim Anfahren und Bremsen auftretende Bewegung des Meßpunktes 7 in Laufrichtung des Reifens 1 erfaßt werden soll, kann dies erfindungsgemäß dadurch erfolgen, daß man an dem Befestigungselement 11 des Meßpunktes 7 einen weiteren, nicht dargestellten Meßwertaufnehmer beweglich anordnet und diesen mit dem Befestigungselement eines zusätzlichen Fixpunktes beweglich verbindet, der an der Felge 2 außerhalb einer durch die Fixpunkte 3 und 4 sowie den Meßpunkt 7 gelegt gedachten Ebene gewählt wird. Dieser dritte Meßwertaufnehmer erfaßt die Bewegungen des Meßpunktes 7 in Laufrichtung des Reifens 1.

## Ansprüche

1. Verfahren zur Messung der globalen Verformung eines Reifens auch während des Fahrbetriebs, in dem man die in einer Querschnittsebene des Reifens auftretende Abstandsänderung zwischen einem für das Verformungsverhalten repräsentativen Meßpunkt des Reifens relativ zu einem an der Felge befindlichen Fixpunkt erfaßt, wobei sich der Meßpunkt und der Fixpunkt innerhalb des Reifens befinden und wobei die Abstandsänderungen mittels eines Meßwertaufnehmers erfaßt werden, dadurch **gekennzeichnet**, daß man die in der Querschnittsebene des Reifens (1) auftretenden vertikalen und lateralen Verschiebungen des Meßpunkts (7) relativ zu zwei an der Felge (2) oder in ihrer Nähe befindlichen Fixpunkten (3,4) erfaßt, die sich beide innerhalb des Reifens (1) befinden und mit dem Meßpunkt (7) ein innerhalb der Querschnittsebene des Reifens (1) liegendes Dreieck bilden, wobei man im Meßpunkt (7) und in den Fixpunkten (3,4) je ein Befestigungselement (11,9 bzw. 10) anbringt und am Befestigungselement (11) des Meßpunkts (7) zwei Meßwertaufnehmer (12,13) beweglich anordnet, von denen man den einen (12) mit dem Befestigungselement (9) des einen Fixpunkts (3) und den anderen (13) mit dem Befestigungselement (10) des anderen Fixpunkts (4) beweglich verbindet.

2. Verfahren nach Anspruch 1, dadurch **gekennzeichnet**, daß man als Ort für den Meßpunkt (7) eine Stelle in der Mitte der Innenseite der Lauffläche (8) des Reifens (1) wählt.

3. Verfahren nach Anspruch 1 oder 2, dadurch **gekennzeichnet**, daß man als Ort für die Fixpunkte (3,4) jeweils eine Stelle auf der Innenseite eines jeden Wulstes (5,6) wählt.

4. Verfahren nach einem der Ansprüche 1 bis 3, dadurch **gekennzeichnet**, daß insbesondere bei höheren Fahrgeschwindigkeiten der Einfluß der Fliehkraft auf die Meßwerte in an sich bekannter Weise kompensiert wird.

5. Verfahren nach einem der Ansprüche 1 bis 4, dadurch **gekennzeichnet**, daß man an dem Befestigungselement (11) des Meßpunkts (7) einen zusätzlichen Meßwertaufnehmer beweglich anordnet und diesen mit dem Befestigungselement eines zusätzlichen Fixpunkts beweglich verbindet, der an der Felge (2) außerhalb einer durch die Fixpunkte (3,4) und den Meßpunkt (7) gelegt gedachten Ebene gewählt wird.

6. Verfahren nach einem der vorhergehenden Ansprüche dadurch **gekennzeichnet**, das als Meßwertaufnehmer (12, 13) jeweils in Reihe mit einem elastischen Glied (15) angeordnete Kraftmeßelemente (14) verwenet werden, wobei die Meßsignale der Kraftmeßelemente (14) als dem Weg des Meßpunkts (7), an dem die Meßwertaufnehmer (12, 13) angreifen, proportionale Wegsignale verwendet werden.

7. Verwendung nach Anspruch 6, dadurch **gekennzeichnet**, daß als elastisches Glied (15) ein linear elastisches Glied verwendet wird.

8. Verwendung nach Anspruch 6 oder 7, dadurch **gekennzeichnet**, daß als elastisches Glied (15) eine Zugfeder (16) verwendet wird.

9. Verwendung nach Anspruch 6, 7 oder 8, dadurch **gekennzeichnet**, daß als Kraftmeßelement (14) ein mit Dehnungsmeßstreifen versehener Hohlzylinder (19) geringer Höhe aus hochfestem Blech verwendet wird.

## Claims

1. Method of measuring the global deformation of a tyre even during travel, in which the distance change is determined which arises in a cross-sectional plane parallel to the axis of rotation of the tyre between a measuring point representative of the deformation properties relative to a fix point located on the rim, the measuring point and the fix point being located inside the tyre and the distance changes being determined by means of a transducer, characterised in that the vertical and lateral displacements of the measuring point (7) arising in the cross-sectional plane of the tyre (1) are determined relative to two fix points (3, 4) on the rim (2) or in its vicinity, which are both located inside the tyre (1) and which form with the measuring point (7) a triangle lying inside the cross- seotional plane of the tyre (1), a fixing element (11, 9 or 10 respectively) being mounted in the measuring point (7) and in the fix points (3, 4) respectively, and two transducers (12, 13) being movably mounted on the fixing element (11) of the measuring point (7), one of which transducers (12) is connected movably to the fixing element (9) of the one fix point (3) and the other (13) to the fixing element (10) of the other fix point (4).

2. Method according to claim 1, characterised in that a point in the centre of the inside of the running race (8) of the tyre (1) is chosen as a location for the measuring point (7).

3. Method according to claim 1 or 2, characterised in that a point on the inside of each bulge (5, 6) is chosen as a location for each of the fix points (3, 4).

4. Method according to one of claims 1 to 3, characterised in that in particular at high travel speeds, the effect of centrifugal force on the measurements is compensated in a known manner.

5. Method according to one of claims 1 to 4, characterised in that an additional transducer is movably mounted on the fixing element (11) of the measuring point (7) and movably connects the measuring point (7) to the fixing element of an additional fix point, which is chosen on the rim (2) outside a hypothetical plane passing through the fix points (3, 4) and the measuring point (7).

6. Method according to one of the preceding claims, characterised in that as transducer (12, 13) load-sensing elements (14) are used, which are arranged in series each with a resilient member (15), the measurement signals of the load-sensing elements (14) being used as distance signals proportional to the distance covered by the measuring point (7) on which the transducers (12, 13) act.

7. Method according to claim 6, characterised in that a linear resilient member is used as a resilient member (15).

8. Method according to claim 6 or 7, characterised in that a draw spring (16) is used as a resilient member (15).

9. Method according to claim 6, 7 or 8, characterised in that as a load-sensing element (14) a low hollow cylinder (19) provided with wire strain gauges and composed of extra strong sheet metal is used.

**Revendications**

1. Procédé pour mesurer la déformation globale d'un pneumatique même pendant son déplacement, selon lequel on détecte la variation, qui apparaît dans un plan de coupe transversal parallèlement à l'axe de rotation du pneumatique, de la distance entre un point de mesure du pneumatique, représentatif du comportement de déformation, et un point fixe situé sur la jante, et selon lequel le point de mesure et le point fixe sont situés à l'intérieur du pneumatique et les modifications de la distance sont détectées à l'aide d'un capteur de mesure, caractérisé en ce qu'on détecte les décalages verticaux et latéraux, qui apparaissent dans le plan de coupe transversal du pneumatique (1), du point de mesure par rapport à deux points fixes (3,4), qui sont situés sur la jante (2) ou à proximité de cette dernière, en étant tous les deux à l'intérieur du pneumatique (1) et forment, avec le point de mesure (7), un triangle situé à l'intérieur du plan de coupe transversal du pneumatique (1), et qu'on installe, au niveau du point de mesure (7) et des points fixes (3,4), des éléments respectifs de fixation (11,9 ou 10) et qu'on dispose, de manière qu'ils soient mobiles sur un élément de fixation (11) du point de mesure (7), deux capteurs de mesure (12,13), que l'on relie, de manière qu'ils soient mobiles, l'un (12) à l'élément de fixation (9) d'un point fixe (3) et l'autre (13) à l'élément de fixation (10) de l'autre point fixe (4).

2. Procédé selon la revendication 1, caractérisé en ce qu'on choisit, comme lieu pour le point de mesure (7), un emplacement situé au centre de la face intérieure de la surface de roulement (8) du pneumatique (1).

3. Procédé suivant la revendication 1 ou 2, caractérisé par le fait qu'on choisit, comme lieu pour les points fixes (3,4), des emplacements respectifs situés sur la face intérieure de chaque talon (5,6).

4. Procédé selon l'une des revendications 1 à 3, caractérisé en ce que notamment dans le cas de vitesses assez élevées de déplacement, on compense d'une manière connue en soi l'influence de la force centrifuge sur les valeurs de mesure.

5. Procédé selon l'une des revendications 1 à 4, caractérisé en ce qu'on dispose un capteur de mesure supplémentaire de manière qu'il soit mobile sur l'élément de fixation (11) du point de mesure (7) et qu'on relie ce capteur, de manière qu'il soit mobile, à l'élément de fixation d'un point fixe supplémentaire, qu'on choisit sur la jante (2) à l'extérieur d'un plan imaginaire passant par les points fixes (3,4) et le point de mesure (7).

6. Procédé selon l'une des revendications précédentes, caractérisé en ce qu'on utilise comme capteurs de mesure (12,13), respectivement des éléments dynamométriques (14) montés en série avec les éléments élastiques (15), les signaux de mesure des éléments dynamométriques (14) étant utilisés en tant que signaux de déplacement proportionnels au trajet du point de mesure (7), auquel sont accrochés les capteurs de mesure (12,13).

7. Procédé selon la revendication 6, caractérisé en ce qu'on utilise comme élément élastique (15) un élément élastique linéaire.

8. Procédé selon la revendication 6 ou 7, caractérisé en ce qu'on utilise comme élément élastique (15) un ressort de traction (16).

9. Procédé selon la revendication 6,7 ou 8, caractérisé en ce qu'on utilise comme élément dynamométrique (14) un cylindre creux (19) formé d'une tôle très résistante, possédant une faible hauteur et comportant des jauges extensométriques.